# EUROPÄISCHE PATENTSCHRIFT

(11) **EP 2 558 347 B1**
(45) Veröffentlichungstag und Bekanntmachung des Hinweises auf die Patenterteilung: **12.03.2014**
(21) Anmeldenummer: 11718255.0
(22) Anmeldetag: 24.02.2011
(51) Int. Cl.: B62B 3/14

(54) **AUS EINER ANZAHL VON GLEICHEN INEINANDER GESCHOBENEN EINKAUFSWAGEN BESTEHENDER STAPELVERBUND**
STACK COMPRISING A NUMBER OF IDENTICAL SHOPPING CARTS PUSHED ONE INSIDE THE OTHER
ENSEMBLE D'EMPILEMENT, FORMÉ D'UNE PLURALITÉ DE CHARIOTS DE SUPERMARCHÉ IDENTIQUES, ENCASTRÉS LES UNS DANS LES AUTRES

(30) Priorität: 07.01.2011 DE 202011001229 U; 04.10.2010 DE 202010013816 U; 13.04.2010 DE 102010014759
(43) Veröffentlichungstag der Anmeldung: 20.02.2013
(73) Patentinhaber: Eberlein, Martin, 89358 Kammeltal (DE)
(72) Erfinder: Eberlein, Martin, 89358 Kammeltal (DE)
(86) Internationale Anmeldenummer: PCT/DE2011/000193
(87) Internationale Veröffentlichungsnummer: WO 2011/127880

(56) Entgegenhaltungen:
- DE-U1- 8 911 371
- DE-U1- 9 212 615
- GB-A- 2 284 985
- US-A- 5 199 728

## Beschreibung

Die Erfindung betrifft jeweils einen aus einer Anzahl von gleichen ineinander geschobenen Einkaufswagen bestehenden Stapelverbund entsprechend dem Oberbegriff des Patentanspruches 1 und entsprechend dem Oberbegriff des Patentanspruches 2.

Einkaufswagen der hier vorliegenden Art werden von den Herstellern in Stapelverbünden an die Abnehmer gesandt. Transportmittel hierfür sind in der Regel Lastwagen, Schiffe, Container und dergleichen. Abnehmer der Einkaufswagen sind üblicherweise Selbstbedienungsgeschäfte bekannter Handelsketten. Die Einkaufswagen werden vom Hersteller in gebrauchsfertigem Zustand angeliefert. Der gebrauchsfertige Zustand verlangt einen gewissen Mindestabstand zwischen den einzelnen im Stapelverbund an einer Sammelstelle bereit gestellten Einkaufswagen, um die Funktionen der Einkaufswagen zu gewährleisten. Zu diesen Funktionen zählt z. B. die Freiheit der Fahrrollen, beim Entnahmevorgang der Einkaufswagen aus einem Stapelverbund nicht mit den Fahrrollen nächstfolgender Einkaufswagen zu verhaken oder die Garantie, Einkaufswagen unter Benutzung von Pfandschlössern ohne Schwierigkeiten dem Stapelverbund entnehmen und an diesen wieder ankoppeln zu können. Auch müssen, was äußerst wichtig ist, die einzelnen Einkaufswagen in einem Stapelverbund in Stapelabständen einander folgend so weit voneinander entfernt sein, dass komplette Stapelverbünde, auch in einer beim Bewegen sich von selbst einstellenden Schlangenform, auf Parkplätzen, mit oder ohne maschinelle Hilfe, problemlos bewegt werden können, ohne dass die einzelnen Einkaufswagen, insbesondere aber deren Fahrrollen, miteinander verklemmen oder verhaken. Schließlich müssen die Abstände der zum Gebrauch bereitstehenden Einkaufswagen aus Sicherheitsgründen so gewählt sein, dass man sich nach erfolgter Nutzung der Einkaufswagen beim Einschieben der Einkaufswagen in einen Stapelverbund nicht die Finger einklemmt.

Der Versand von Einkaufswagen kostet Geld und je weniger Einkaufswagen, Fahrgestelle oder Körbe eines für den Transport bestimmten Stapelverbundes auf einer vorbestimmten Fläche eines Transportmittels Platz finden, desto höher werden letztendlich die pro Einkaufswagen entstehenden Versandkosten.

Es sind Einkaufswagen bekannt, die mit Mitteln ausgestattet sind, welche die beim Ineinanderschieben, also beim Stapeln der Einkaufswagen entstehenden Stoßkräfte abmildern, um einerseits den bei diesem Vorgang entstehenden Lärm zu reduzieren und um andererseits Beschädigungen an den Einkaufswagen zu vermeiden. Diese Mittel können erweiternd auch so gestaltet sein, dass sie als Anschlag für jene bewegbare Rückwand dienen; welche die rückwärtige Öffnung des Korbes der Einkaufswagen verschließt. Die EP 0 842 838 B1 sowie die WO 2008/122257 A1 beschreiben solche Einkaufswagen, bei denen beim Stapelvorgang Teile oder bauliche Abschnitte eines rückwärtig einzuschiebenden Einkaufswagens an die stoßdämpfenden Mittel eines vorausbefindlichen Einkaufswagens anstoßen oder umgekehrt. Diese nur wenige Millimeter dicken Mittel sind bei Fertigstellung der Einkaufswagen und vor deren Auslieferung an den Einkaufswagen angebracht, so dass die Einkaufswagen vor ihrer Auslieferung gebrauchsfertig vorliegen.

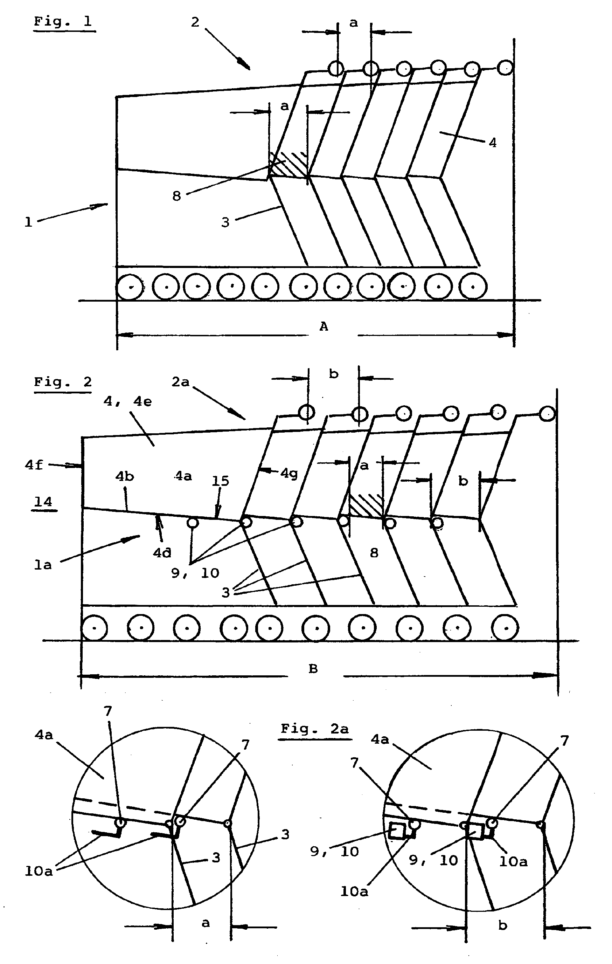

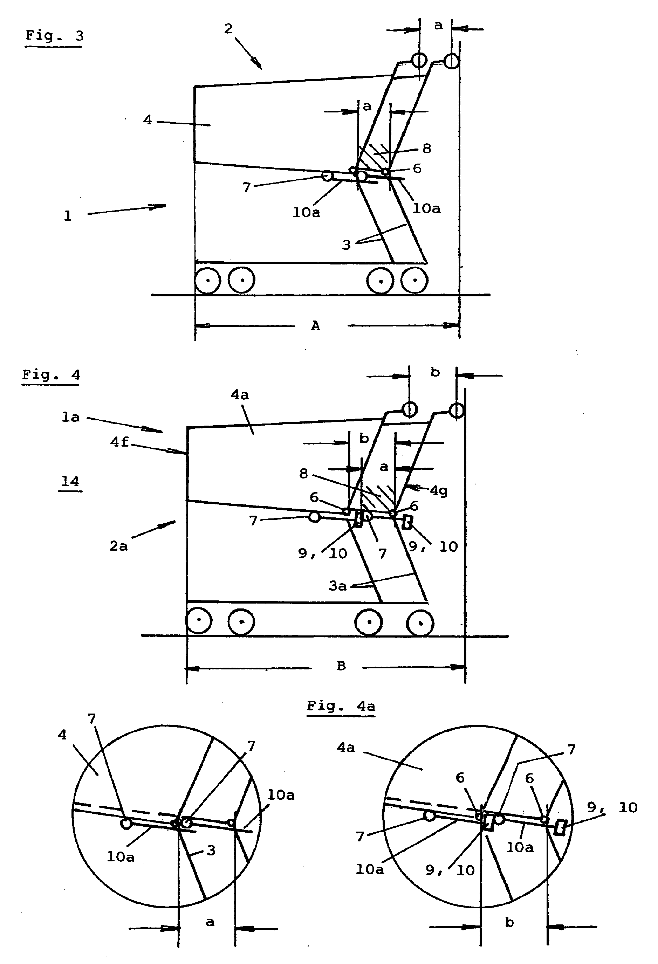

Die US 5,199,728 A beschreibt einen mit gleichen Wagen stapelbaren Einkaufswagen gemäß dem Oberbegriff von Anspruch 1, der mit aus Kunststoff bestehenden Distanzstücken ausgestattet ist, die beidseitig am unteren Rahmen des Fahrgestelles angeordnet sind. Die beiden Distanzstücke tragen am unteren Rahmen auf und sollen eine Beschädigung von Teilen des Einkaufswagens dann verhindern, wenn dieser in einen vorausbefindlichen Einkaufswagen platzsparend eingeschoben wird. Die Distanzstücke sind ortsfest und damit unbewegbar am unteren Rahmen angeordnet und werden bei der Montage der Einkaufswagen angebracht. Der genannten Schrift ist entnehmbar, dass die Distanzstücke auch nachträglich, also nach der Auslieferung der Einkaufswagen, an diesen angebracht werden können. Dadurch dass die Distanzstücke am Rahmen auftragen, lassen sich mit Distanzstücken ausgestattete Einkaufswagen nicht so eng stapeln wie dies bei gleichen Einkaufswagen der Fall ist, die nicht mit solchen Distanzstücken ausgestattet sind. Aus Fig. 2 und Fig. 3 der genannten Patentschrift ist dieser Effekt erkennbar.

In der GB 2 284 985 A werden Einkaufswagen beschrieben, die wenigstens ein bewegbares Mittel aufweisen, das in gestapelter Form der Einkaufswagen eine Lage derart einnimmt, dass die vorderen Lenkrollen frei um ihre senkrechte Achse schwingen können und bei der Entnahme der Einkaufswagen aus dem Stapelverbund eine Lage aufsuchen, die ein freies Bewegen der vorderen Rollen um ihre senkrechte Achse verhindert. Die vorderen Rollen wirken dann wie so genannte "Bockrollen", welche bewirken, dass der Einkaufswagen beim Gebrauch, vor allem beim Befahren seitlicher Gefällstrecken, nicht zur Seite ausbricht. Die derart ausgerüsteten Einkaufswagen lassen sich somit spurgetreuer bewegen.

Bei dem in der DE 89 11 371 U1 beschriebenen Transportwagen geht es wieder darum, Beschädigungen am Transportwagen zu verhindern, die dann auftreten können, wenn die Wagen platzsparend gestapelt werden. Die Transportwagen werden deshalb bei ihrer Montage mit Anschlägen ausgestattet, die eine puffernde Wirkung haben. Beim Stapeln der Transportwagen schlagen die Anschläge der Wagen gegenseitig an. Die Anschläge sind da-bei so bemessen, dass sich in gestapeltem Zustand zwischen jedem Transportwagen ein Stapelabstand einstellt, durch den garantiert sein soll, dass keine Beschädigungen mehr auftreten können.

Durch die in der DE 92 12 615 U1 vorgeschlagene Lösung soll verhindert werden, dass sich Transportwagen, insbesondere solche, die auf Flughäfen anzutreffen sind, beim Einsammeln der Transportwagen aus dem sich bildenden Stapelverbund lösen. Dabei wird vorgeschlagen, ein bewegbares Anschlagteil in Wirkverbindung mit dem bewegbaren Schiebgriff zu bringen, wobei durch die Bewegung des Schiebegriffes die am Transportwagen angebrachte Bremse gelöst oder arretiert ist. In gestapelten Zustand der Transportwagen hintergreift das bewegbare Anschlagteil eines rückwärtig eingeschobenen Transportwagens eine am vorausbefindlichen Transportwagen angeordnete Querverbindung. Aus dieser Position kann der zuletzt eingeschobene Transportwagen einem Stapel nur dann entnommen werden, wenn der Schiebegriff des Transportwagens zum Lösen der Bremse entsprechend bewegt wird. Dann hintergreift das Anschlagteil nicht mehr die besagte Querverbindung des vorausbefindlichen Transportwagens. Das Anschlagteil wird somit auch beim Gebrauch der Transportwagen nutzlos immer dann bewegt, wenn der Schiebegriff aus einer den Transportwagen bremsenden Funktion in eine den Transportwagen zum Fahren freigebende Position verschwenkt wird. Die Funktion des Anschlagteiles ist somit ausschließlich auf das Sichern der Transportwagen vor einem Lösen aus dem Stapelverbund reduziert. Dies gilt vor allem dann, wenn ein solcher Stapelverbund auf einer leicht geneigten Gefällstrecke bewegt werden soll.

Ausgehend von diesem Stand der Technik besteht die Aufgabe der Erfindung darin, bei Stapelverbünden der hier vorliegenden Art nach Lösungen zu suchen, die eine Reduzierung der Versandkosten bewirken.

Bezogen auf die hier vorliegenden Stapelverbünde sind die Lösungen im kennzeichnenden Teil der Patentansprüche 1 und 2 beschrieben. Weitere Lösungsmerkmale finden sich in den Unteransprüchen.

Während bisher die Länge des für den Transport bestimmten Stapelverbundes und die Länge des gleichen für die Sammelstelle bestimmten Stapelverbundes immer gleich war, besteht der entscheidende Vorteil der Erfindung nunmehr darin, dass durch die jetzt engere Stapelbarkeit der Einkaufswagen bei den für den Transport bestimmten Stapelverbünden die Länge dieser Stapelverbünde kürzer ist als bisher und deshalb jetzt wesentlich mehr Einkaufswagen pro Flächeneinheit auf einem Transportmittel Platz finden als bei Stapelverbünden, die an Sammelstellen der Selbstbedienungsgeschäfte zur Nutzung der Einkaufswagen bereit gestellt werden und aufgrund der eingangs genannten Erfordernisse eine größere Länge aufweisen müssen. Durch die vorgeschlagenen Lösungen lässt sich somit eine erhebliche Reduzierung der Versandkosten pro geliefertem Einkaufswagen erzielen.

Eine erste vorteilhafte Möglichkeit, die Länge eines für den Transport bestimmten Stapelverbundes zu reduzieren, beziehungsweise die Länge des für die Sammelstelle bestimmten gleichen Stapelverbundes zu vergrößern besteht darin, an den Einkaufswagen anbringbare Abstandshalter bei den für den Transport bestimmten Einkaufswagen weg zu lassen, um dann die Abstandshalter nach erfolgtem Transport des Stapelverbundes an geeigneten Befestigungsstellen der einzelnen Einkaufswagen anzubringen, so dass letztere für das Bereitstellen an Sammelstellen und für den Gebrauch nutzbar sind. Je nach Bauweise der Einkaufswagen gibt es durchaus unterschiedlich angeordnete Befestigungsstellen. Dafür geeignet sind allemal die Körbe, die Fahrgestelle oder auch gesondert vorliegende Verbindungsmittel, welche die Körbe mit den Fahrgestellen verbinden. Als Abstandshalter bieten sich mit Befestigungsmitteln anbringbare oder rastschlüssig aufsetzbare oder ganz allgemein aufsteckbare Abstandshalter an, die pufferartig ausgebildet sind und die nach dem Befestigungsvorgang unbewegbar an der für sie vorbestimmten Stelle am Einkaufswagen verbleiben. Diese Stellen sind an den Körben oder Fahrgestellen oder Verbindungsmitteln so gewählt, dass beim Ineinanderschieben der Einkaufswagen irgend ein Teil oder Teile des einen Einkaufswagens an die Abstandshalter des jeweils benachbarten Wagens anstoßen oder umgekehrt. Bevorzugte Befestigungsstellen für die Abstandshalter sind beim Korb dessen Seitenwände oder dessen Boden oder der hintere untere Rand des Korbes. Bei den Fahrgestellen bieten sich zum Beispiel die Längsholme an, welche den Korb tragen oder auch wenigstens eine Querverbindung, welche die Längsholme in bekannter Weise verbindet. Die erwähnten Verbindungsmittel bieten sich ebenfalls an, um die Befestigungsstellen zu tragen oder zu bilden.
Eine zweite Möglichkeit, die Länge eines für den Transport bestimmten Stapelverbundes zu reduzieren, beziehungsweise die Länge des für die Sammelstelle bestimmten gleichen Stapelverbundes zu vergrößern besteht darin, bewegliche Abstandshalter ebenfalls an jenen Befestigungsstellen an den Einkaufswagen vorzusehen, wie vorab beschrieben, wobei die Abstandshalter aus einer ersten Position, bei welcher der Stapelverbund für den Transport bestimmt und dessen Länge dadurch kürzer ist, nach erfolgtem Transport des Stapelverbundes in eine zweite Position überführbar sind, so dass die einzelnen Stapelabstände zwischen den Einkaufswagen größer sind und der somit neu geschaffene, für eine Sammelstelle bestimmte Stapelverbund länger ist.
Die genannten Beispiele sollen verdeutlichen, dass es verschiedene Möglichkeiten gibt, den gemäß der Erfindung angestrebten Nutzeffekt zu erzielen. Mit den eingangs zum Stand der Technik zählenden Einkaufswagen lässt sich dieser Nutzeffekt nicht erzielen, weil die darin beschriebenen Mittel, Teile und dergleichen nicht zur Bildung unterschiedlich langer Stapelverbünde vorgesehen, sondern zur Erfüllung anderer Aufgaben bestimmt sind.

Die Erfindung wird anhand von Ausführungsbeispielen näher erläutert. Es zeigt
- Fig. 1: einen aus gleichen Einkaufswagen gebildeten Stapelverbund, der für den Transport bestimmt ist;
- Fig. 2: den gleichen, mit nachträglich angebrachten Abstandshaltern ausgestatteten Stapelverbund an einer Sammelstelle;
- Fig. 2a: zwei Einzelheiten aus Fig. 1 und 2;
- Fig. 3: zwei Einkaufswagen in Anlehnung an Fig. 1;
- Fig. 4: zwei Einkaufswagen in Anlehnung an Fig. 2;
- Fig. 4a: zwei Einzelheiten aus Fig. 3 und 4;
- Fig. 5: zwei weitere Einkaufswagen in Anlehnung an Fig. 1;
- Fig. 6: zwei weitere Einkaufswagen in Anlehnung an Fig. 2;
- Fig. 6a: eine Einzelheit aus Fig. 6;
- Fig. 7: einen Einkaufswagen mit beweglich angeordneten Abstandshaltern;
- Fig. 8: einen Stapelverbund, bei dem sowohl die Anordnung der Abstandshalter der für den Transport als auch deren Anordnung bei den für den Gebrauch bestimmten Einkaufswagen ersichtlich ist;
- Fig. 9 bis Fig. 11: weitere Gestaltungs- und Anordnungsmöglichkeiten für bewegliche Abstandshalter;
- Fig. 12: einen Einkaufswagen mit weiteren möglichen Abstandshaltern sowie

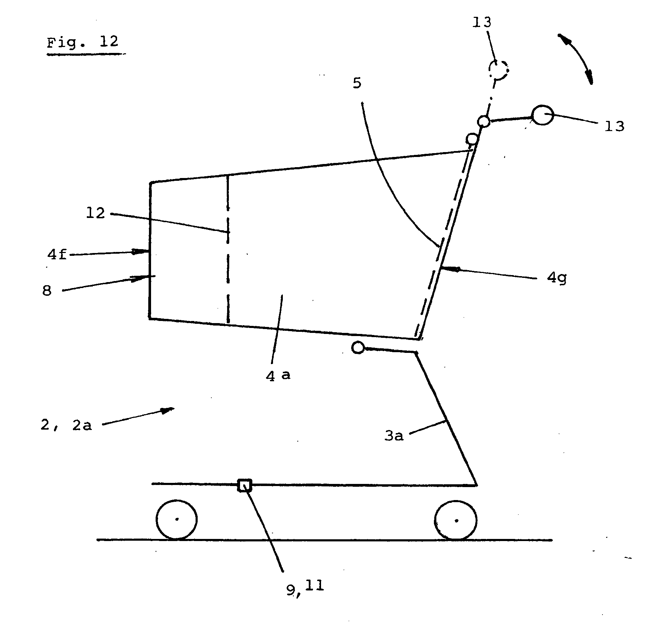

Die von der Erfindung erfassten Einkaufswagen 2, 2a, siehe Zeichnungen, betreffen alle Einkaufswagen, die den Kunden in Selbstbedienungsgeschäften an Sammelstellen 14 zur Nutzung bereit gestellt werden. Da der Aufbau solcher Einkaufswagen 2, 2a zur Genüge bekannt ist, erübrigt sich hier eine ausführliche Beschreibung. Allen diesen Einkaufswagen 2, 2a ist gemeinsam, dass sie ein Fahrgestell 3, 3a aufweisen, das wenigstens einen Korb 4, 4a trägt, der gegen Lösen gesichert, also ortsfest auf dem Fahrgestell 3, 3a angeordnet ist und in der einmal montierten Position verbleibt. Wesentlich ist auch, dass die Einkaufswagen 2, 2a in bekannter Weise platzsparend ineinanderschiebbar sind, so dass wenigstens zwei gleiche Einkaufswagen 2 oder 2a einen Stapelverbund 1 oder 1a bilden, wobei deren Fahrgestelle 3 oder 3a und deren Körbe 4 oder 4a teilweise ineinander geschoben sind. Zu diesem Zweck ist die rückseitige Öffnung des Korbes 4, 4a der Einkaufswagen 2, 2a in ebenfalls bekannter Weise durch eine schwenkbare Rückwand 5 verschließbar, siehe auch Fig. 12.

Fig. 1 zeigt einen für den Transport vorgesehenen, vom Hersteller der Einkaufswagen 2 zu einem Selbstbedienungsgeschäft zu liefernden Stapelverbund 1, der durch mindestens zwei gleiche und ineinander geschobene Einkaufswagen 2 gebildet ist. Die Einkaufswagen 2 sind mit ihren Fahrgestellen 3 und mit ihren Körben 4 so ineinander geschoben, dass sie in bekannter Weise mit irgendwelchen Teilen oder Abschnitten an den nächstfolgenden Einkaufswagen 2 anstoßen, so dass, ebenfalls in bekannter Weise, jeweils ein von einem zum nächsten Einkaufswagen 2 sich einstellender Stapelabstand mit der nicht mehr verkleinerbaren Länge a gebildet ist. Die Gesamtlänge des auf diese Weise aus mehreren Einkaufswagen 2 gebildeten, für den Transport bestimmten Stapelverbundes 1 ist durch das Maß A gekennzeichnet. Ergänzend und schraffiert ist der zwischen zwei Einkaufswagen 2 gebildete ungenutzte Stapelraumbereich 8 dargestellt, der sich bekanntlich beim Ineinanderschieben der Einkaufswagen 2 ergibt und der vom restlichen hinteren Abschnitt eines jeweils einzuschiebenden Einkaufswagens 2 nicht genutzt wird. Dieser Stapelraumbereich 8 wird in der Fachsprache auch "Stapeltotraum" genannt. Seine horizontal sich erstreckende Länge ist der Stapelabstand a.

Fig. 2 zeigt den in Fig. 1 beschriebenen, aus der gleichen Anzahl von Einkaufswagen 2a gebildeten Stapelverbund 1a, der sich nun an einer Sammelstelle 14 eines Selbstbedienungsgeschäftes befindet, damit die Kunden in üblicher Weise einzelne Einkaufswagen 2a zur Nutzung entnehmen können. Diese Nutzung verlangt, wie bereits eingangs darauf hingewiesen, einen zwischen zwei benachbarten Einkaufswagen 2a vorbestimmten Mindeststapelabstand mit der Länge b, der größer ist als der Stapelabstand a, siehe Fig. 1. Der größere Stapelabstand b lässt sich im Beispiel durch Abstandshalter 9, wie Puffer 10 und dergleichen erzielen, die nach erfolgtem Transport der Einkaufswagen 2 an jedem Einkaufswagen 2a nachträglich angebracht sind. Durch das eingebrachte Volumen der Abstandshalter 9 vergrößert sich der Stapelabstand zwischen den einzelnen Einkaufswagen 2a von a in b. Es empfiehlt sich, an jedem Einkaufswagen 2a mindestens zwei Abstandshalter 9 vorzusehen, wobei nur ein Abstandshalter 9, der dann breiter sein müsste, pro Einkaufswagen 2a ebenfalls denkbar ist. Die Abstandshalter 9 verbleiben ortsfest an den Einkaufswagen 2a in unveränderter Lage. Diese Anordnung lässt sich beispielsweise durch Inanspruchnahme geeigneter Befestigungsstellen an den Einkaufswagen 2, 2a durch Anschrauben oder Vemieten oder durch Aufstecken mit anschließendem Verrasten usw. erzielen. Derart befestigt können die Abstandshalter 9 beispielsweise an der Unterseite 4d des Korbbodens 4b, oder am hinteren unteren Rand 6 der Körbe 4a oder an den beiden Seitenwänden 4e der Körbe 4, oder an zwei Stützeinrichtungen 15, welche die Körbe 4 mit den Fahrgestellen 3 verbinden oder an den Fahrgestellen 3 angeordnet sein, siehe auch Fig. 3 bis 6a. Aus der schematisch gezeichneten Darstellung ist ersichtlich, dass sich im Beispiel bei jedem Einkaufswagen 2a, unabhängig davon, ob sich die Abstandshalter 9 nun am Korb 4 oder an den Stützeinrichtungen 15 oder an den Fahrgestellen 3a befinden, in der dargestellten Seitenansicht der Einkaufswagen 2a betrachtet, die Abstandshalter 9 in einem Bereich zwischen der Vorderseite 4f und der Rückseite 4g der Körbe 4 befinden. Die Lage der Abstandshalter 9 ist im Beispiel an jedem Einkaufswagen 2a so gewählt, dass beim Ineinanderschieben der Einkaufswagen 2a, um einen Stapelverbund 1a zu bilden, die Einkaufswagen 2a an oder mit ihren Abstandshaltern 9 an wenigstens ein geeignetes, in seiner Lage unveränderbares Bauteil des jeweils nächstfolgenden Einkaufswagens 2a anstoßen und sich durch die eingefügten Abstandshalter 9 zwischen den Einkaufswagen 2a jeweils ein Stapelabstand b bildet, der größer ist als der Stapelabstand a, der jeweils zwischen den Einkaufswagen (2) des für den Transport bestimmten Stapelverbundes 1 gebildet ist. Im Beispiel stößt der wenigstens eine Abstandshalter 9 eines in den Stapelverbund 1a einzuschiebenden Einkaufswagens 2a an den hinteren unteren Rand 6 des Korbes 4a des vorausbefindlichen Einkaufswagens 2a an. Die Abstandshalter 9 können aber auch an das Fahrgestell 3a des vorausbefindlichen Einkaufswagens 2a anstoßen. Vergleichend ist der in Fig. 1 dargestellte ungenutzte Stapelraumbereich 8 ebenfalls in Fig. 2 eingezeichnet. Man erkennt aus der Zeichnung am zuletzt in den Stapelverbund 1a eingeschobenen Einkaufswagen 2a, dass der wenigstens eine Abstandshalter 9 in Schieberichtung der Einkaufswagen 2a betrachtet in einem Abstand vor dem Stapelraumbereich 8 angeordnet ist, so dass sich der größere Stapelabstand b einstellt. Je weiter man sich also im Beispiel mit der Anordnung der Abstandshalter 9 der Vorderseite 4f des Korbes 4 nähert, umso größer wird die Länge der Stapelabstände b. Daraus folgt, dass nach erfolgtem Anbringen der Abstandshalter 9 an den Einkaufswagen 2a die Länge B des für die Sammelstelle 14 bestimmten Stapelverbundes 1a größer ist als die Länge A des in Fig. 1 gezeigten, aus der gleichen Anzahl von Einkaufswagen 2 bestehenden und für den Transport bestimmten Stapelverbundes 1.

Ergänzend zu Fig. 2 zeigt Fig. 2a jenen Bereich, in dem die beiden Abstandshalter 9 an den Einkaufswagen 2a angeordnet sind. Unterhalb des Korbes 4, 4a eines jeden Einkaufswagens ist zum Beispiel eine Querverbindung 7 vorgesehen, welche in bekannter Weise die beiden Längsseiten des Fahrgestelles 3, 3a verbindet. Jede Querverbindung 7 weist im Beispiel zwei Befestigungsstellen 10a auf, die als Haken ausgebildet, an der Querverbindung 7 angeordnet sind. Nach erfolgtem Transport der Einkaufswagen 2 werden die in Form von Puffern 10 ausgebildeten Abstandshalter 9 auf die nach vorne weisenden freien Enden der hakenförmigen Befestigungsstellen 10 a aufgesteckt. Die Befestigungsstellen 10a sind, gemessen vom Fußboden, tiefer angeordnet als der hintere untere Rand der Körbe 4, 4a. Aus der Zeichnung ersichtlich sind wieder die Stapelabstände a und b.

Anhand zweier ineinander geschobener Einkaufswagen 2, 2a zeigen Fig. 3, 4 und 4a ein weiteres Beispiel, wie sich, auf ebenfalls praktische Weise, die Stapelabstände a der Einkaufswagen 2 in Stapelabstände b verändern lassen. Im Gegensatz zu den in Fig. 2 vorgeschlagenen Lösungen befinden sich die Abstandshalter 9 nicht zwischen der Vorderseite 4f und der Rückseite 4g der Körbe 4a sondern hinter dem hinteren unteren Rand 6 eines jeden Korbes 4a, siehe Fig. 4. Auch hier sind die Befestigungsstellen 10a tiefer angeordnet als der hintere untere Rand 6 der Körbe 4, 4a. Unterhalb des Korbes 4, 4a der Einkaufswagen 2, 2a befindet sich beispielsweise eine Querverbindung 7, die ebenfalls zwischen der Vorderseite 4f und der Rückseite 4g eines jeden Korbes 4, 4a platziert ist und die dem Fahrgestell 3 angehört. Fig. 3 zeigt zwei Einkaufswagen 2, die keine Abstandshalter 9 aufweisen. Beim Ineinanderschieben der beiden Einkaufswagen 2 schlägt die Querverbindung 7 des hinteren eingeschobenen Einkaufswagens 2 beispielsweise an den hinteren unteren Rand 6 des Korbes 4, nicht aber an die Befestigungsstellen 10a des vorausbefindlichen Einkaufswagens 2 an. Es ergibt sich zwischen den einzelnen Einkaufswagen 2 der Stapelabstand a, was wiederum aus einer Anzahl gleicher Einkaufswagen 2 einen für den Transport bestimmten Stapelverbund 1 mit der Länge A entstehen lässt. Ergänzend und wiederum schraffiert dargestellt ist der zwischen den beiden Einkaufswagen 2 durch den Stapelabstand a gebildete ungenutzte Stapelraumbereich 8. Die Befestigungsstellen 10a befinden sich bei jedem Einkaufswagen 4, 4a hinter dem Stapelraumbereich 8.
Werden nach erfolgtem Transport des Stapelverbundes 1 hinten an den Fahrgestellen 3a der Einkaufswagen 2a mindestens ein, gewöhnlich zwei Abstandshalter 9 an den nach hinten über den hinteren unteren Rand 6 des Korbes 4 vorstehenden Befestigungsstellen 10a angebracht, ergibt sich durch das eingebrachte Volumen der Abstandshalter 9 beim Ineinanderschieben der mit den Abstandshaltern 9 ausgestatteten Einkaufswagen 2a der Stapelabstand b, der größer ist als der Stapelabstand a. Vergleichend ist ebenfalls der in Fig. 3 dargestellte ungenutzte Stapelraumbereich 8 auch in Fig. 4 eingezeichnet. Man erkennt aus der Zeichnung am zuletzt in den Stapelverbund 1a eingeschobenen Einkaufswagen 2a, dass der wenigstens eine Abstandshalter 9 entgegen der Schieberichtung der Einkaufswagen 2a betrachtet in einem Abstand hinter dem Stapelraumbereich 8 angeordnet ist und somit durch sein Volumen den größeren Stapelabstand b entstehen lässt. Je weiter man also an den Einkaufswagen 2a den wenigstens einen Abstandshalter 9 nach hinten vom Stapelraumbereich 8 entfernt platziert, umso größer wird die Länge der Stapelabstände b. Daraus folgt, dass die Länge B des auf diese Weise neu geschaffenen Stapelverbundes 1a, der jetzt für eine Sammelstelle 14 bestimmt ist, größer ist als die Länge A des aus der gleichen Anzahl von Einkaufswagen 2 bestehenden, für den Transport bestimmten Stapelverbundes 1. Der gleiche Effekt lässt sich auch erzielen, wenn die Abstandshalter 9 nach erfolgtem Transport eines Stapelverbundes 1 in geeigneter Weise am hinteren unteren Rand 6 der Körbe 4a angebracht werden, von wo die Abstandshalter 9 dann entweder nach hinten vorstehen oder ein vorbestimmtes Stück nach unten ragen. Beim Ineinanderschieben der Einkaufswagen 2a stößt die Querverbindung 7 oder das Fahrgestell 3a des einzuschiebenden Einkaufswagens 2a an den wenigstens einen nach rückwärts oder nach unten vorstehenden Abstandshalter 9 an, um den Stapelabstand b zu bilden.

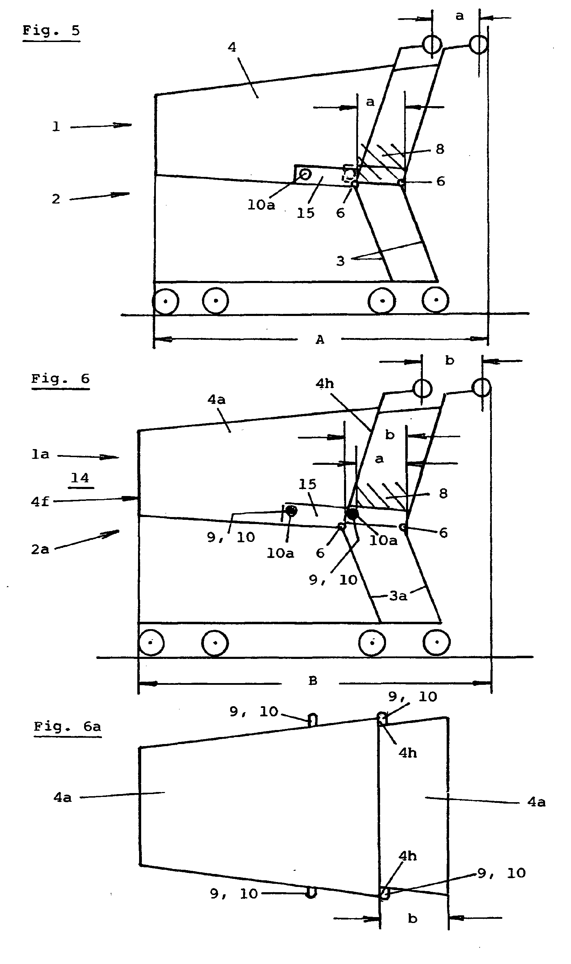

Fig. 5, 6 und 6a (Draufsicht) zeigen in Anlehnung an Fig. 1 und 2 eine weitere Möglichkeit des nachträglichen Anbringens von Abstandshaltern 9 an den Einkaufswagen 2. In der Regel sind die Körbe 4 der Einkaufswagen 2, 2a mit Hilfe von paarweisen Stützeinrichtungen 15 an den Fahrgestellen 3, 3a befestigt. Die Stützeinrichtungen 15 sind in bekannter Weise hochkant angeordnete flache Stege. In ihrem vorderen Bereich sind nun die Stützeinrichtungen 15 mit einem horizontalen, quer zur Schieberichtung der Einkaufswagen 2, 2a verlaufenden Durchbruch vorgesehen. Jeder Durchbruch bildet eine Befestigungsstelle 10a für einen als Puffer 10 ausgebildeten Abstandshalter 9. Jeder Abstandshalter wird nach erfolgtem Transport der Einkaufswagen 2 in einen Durchbruch gesteckt und gegen Lösen gesichert. Anstelle der Stützeinrichtungen 15 können an jeder Längsseite des Korbes hochkant angebrachte Flachstahlstücke vorgesehen sein, die ebenfalls und analog eine Befestigungsstelle 10a für einen Abstandshalter 9 aufweisen. Die seitlich nach außen vorstehenden Abstandshalter 9 schlagen im Stapelverbund 1a an die hintere Begrenzung 4h der Seitenwände 4c der Körbe 4a der jeweils vorausbefindlichen Einkaufswagen 2a an. In den Zeichnungen sind wieder die unterschiedlichen Stapelabstände a und b sowie die unterschiedlichen Längen A und B der Stapelverbünde 1 und 1a eingetragen. Es lassen sich, um Wiederholungen zu vermeiden, alle weiteren Merkmale und Einzelheiten in Verbindung mit den vorangegangenen Ausführungsbeispielen anhand der eingetragenen Positionszahlen bestimmen.

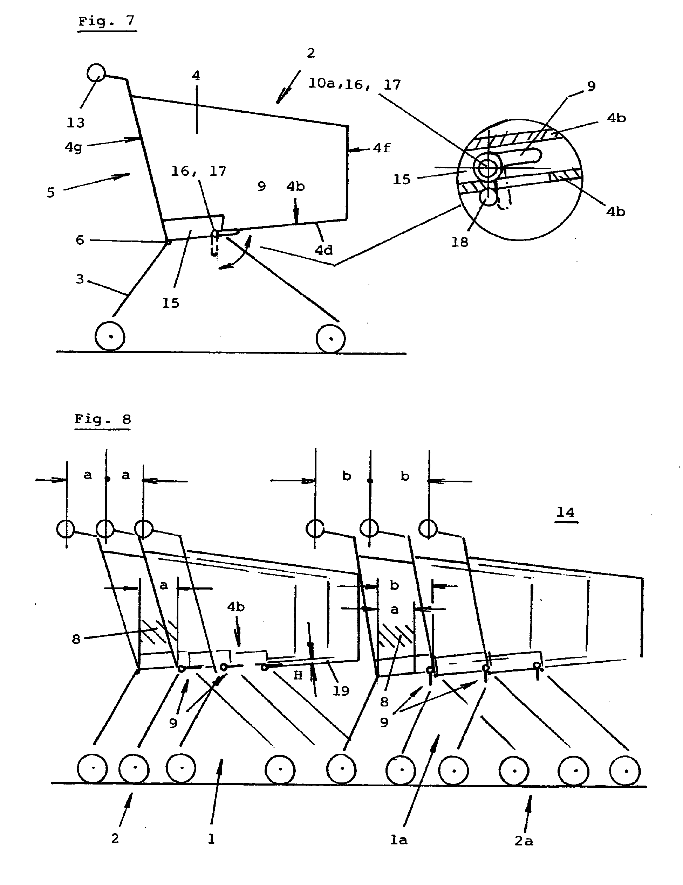

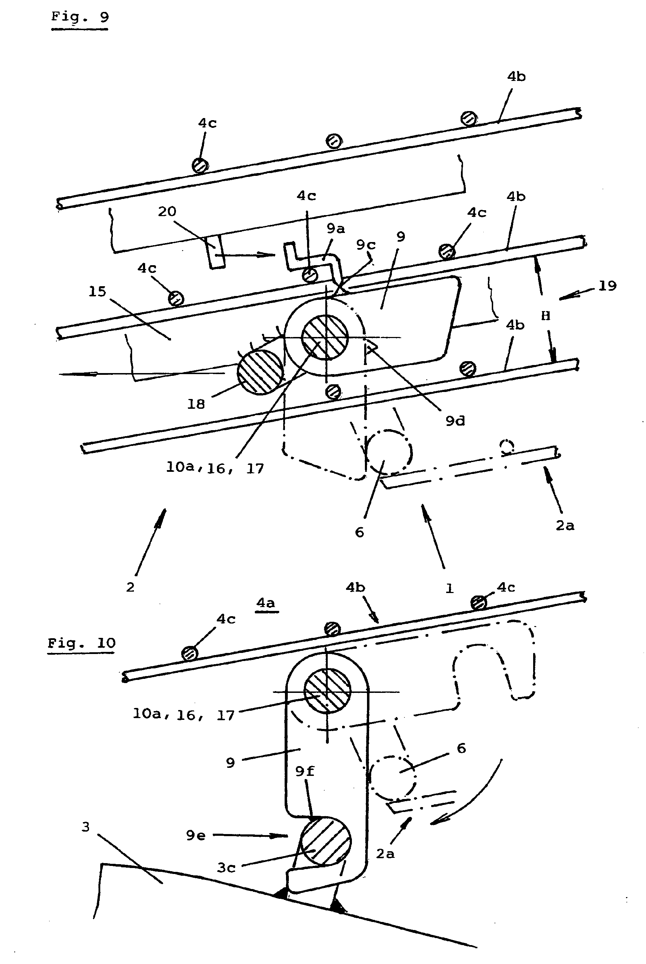

Fig. 7 zeigt einen Einkaufswagen 2, an dem wenigstens ein, gewöhnlich zwei bewegliche Abstandshalter 9 angebracht sind und die, wie die bisher beschriebenen Abstandshalter 9, ebenfalls dazu bestimmt sind, den Stapelabstand mehrerer Einkaufswagen 2 zumindest in einen für den Gebrauch der Einkaufswagen 2 vorgesehenen größeren Stapelabstand b herzustellen. Bei diesem Ausführungsbeispiel ist der Einkaufswagen 2 zu beiden Seiten mit je einer den Korb 4 mit dem Fahrgestell 3 verbindenden Stützeinrichtung 15 ausgestattet, wobei gewöhnlich an jeder Stützeinrichtung 15 ein beweglicher Abstandshalter 9 angebracht ist. Derartig bewegbar angeordnete Abstandshalter 9 können auch in geeigneter Weise und an geeigneten Befestigungsstellen 10a am Fahrgestell 3 oder am Korb 4, insbesondere an dessen Unterseite 4d vorgesehen sein. Aus der Zeichnung ist wiederum ersichtlich, dass der wenigstens eine Abstandshalter 9 in einem Bereich zwischen der Vorderseite 4f und der Rückseite 4g des Korbes 4 angeordnet ist. Jeder Abstandshalter 9 ist im Beispiel unterhalb oder tiefer als der in bekannter Weise gitterartig oder mit Durchbrüchen ausgebildete Korbboden 4b angeordnet. Ausschnittweise und vergrößert zeigt das im Kreis gezeichnete Detail die eben beschriebene Anordnung. Jeder Abstandshalter 9 ist ein simples Anschlagteil, das bewegbar um eine horizontale Achse 16 an einem eine Befestigungsstelle 10a bildenden Achsabschnitt 17 gelagert ist. Jeder Abstandshalter 9 lässt sich entweder von Hand oder von selbst mit Hilfe der Schwerkraft aus einer Nichtgebrauchslage, in der er in etwa parallel zum Korbboden 4b angeordnet ist und in der er beim Ineinanderschieben der Einkaufswagen 2 funktionslos bleibt, in eine nach unten gerichtete Gebrauchslage bringen, siehe strichpunktierte Darstellung, in der er dann seine Anschlagfunktion wahrnehmen kann. Die Nichtgebrauchslage nimmt der wenigstens eine Abstandshalter 9 dann ein, wenn es gilt, einen aus mehreren gleichen Einkaufswagen 2 gebildeten Stapelverbund 1 zu transportieren. In Gebrauchslage hingegen ist der wenigstens eine Abstandshalter 9 zum Anschlagen an wenigstens ein im rückwärtigen Bereich eines vorausbefindlichen Einkaufswagens 2 angeordnetes Teil, beispielsweise an den hinteren unteren Rand 6 des Korbes 4a bestimmt, wobei sich der Abstandshalter 9 nach hinten beispielsweise an einem an einer Stützeinrichtung 15 oder am Fahrgestell 3 angeordneten Stützteil 18 abstützt, um den beim Ineinanderschieben der Einkaufswagen 2a entstehenden Stoß abzufangen, siehe auch Fig. 9. Der Doppelpfeil zeigt das Ausmaß der Beweglichkeit des wenigstens einen Abstandshalters 9. Jeder Abstandshalter 9 ist somit aus einer ersten Position (Nichtgebrauchslage) in eine zweite Position (Gebrauchslage) überführbar an den Einkaufswagen 2, 2a angeordnet.

Fig. 8 zeigt in einer Zeichnung links einen für den Transport bestimmten Stapelverbund 1 und übergehend rechts den gleichen, nun für den Gebrauch an einer Sammelstelle 14 vorgesehenen Stapelverbund 1a. Jeder der beiden Stapelverbünde 1, 1a ist der Einfachheit halber durch jeweils drei Einkaufswagen 2, 2a dargestellt. Bei dem für den Transport bestimmten Stapelverbund 1 nehmen der oder die Abstandshalter 9 jene Nichtgebrauchslage ein, bei der diese in etwa parallel zum Korbboden 4b angeordnet sind. Um Einkaufswagen 2, 2a platzsparend stapeln zu können, ist in bekannter Weise zwischen den einzeln schräg ansteigend und versetzt angeordneten Korbböden 4b der Einkaufswagen 2 jeweils ein Raum 19 gebildet. Die Erfindung nutzt diesen Umstand. Man erkennt in der Zeichnung, dass jeweils wenigstens ein in Nichtgebrauchslage befindlicher Abstandshalter 9 in jeweils einem Raum 19 untergebracht ist, der sich zwischen dem Korbboden 4b eines Einkaufswagens 2 und dem Korbboden 4b des jeweils nächsten vorausbefindlichen Einkaufswagens 2 befindet, siehe auch Fig. 9. Die Höhe eines jeden Raumes 19 ist durch das Maß H gekennzeichnet. Beim rechts dargestellten Stapelverbund 1a befindet sich der wenigstens eine Abstandshalter 9 in Gebrauchslage. In dieser Lage, also in der zweiten Position, stellt sich der Stapelabstand b ein, der zwischen den einzelnen für den Gebrauch bestimmten Einkaufswagen 2a größer als der jeweilige Stapelabstand a jener Einkaufswagen 2, die den für den Transport bestimmten Stapelverbund 1 bilden und bei dem die Abstandshalter 9 die erste Position einnehmen. Vergleichend sind wieder die ungenutzten Stapelraumbereiche 8 eingezeichnet. Die Länge B des somit gebildeten, für eine Sammelstelle 14 bestimmten Stapelverbundes 1a mit den Stapelabständen b ist daher wieder größer als die Länge A des aus der gleichen Anzahl gebildeten, die Stapelabstände a aufweisenden Stapelverbundes 1, der für den Transport bestimmt ist.

Fig. 9 zeigt ausschnittweise und schematisch die Korbböden 4b von drei platzsparend ineinander geschobenen Einkaufswagen 2. Die Zeichnung zeigt den wenigstens einen Abstandshalter 9 des zweiten, also mittleren Ein-Einkaufswagens 2 des Stapelverbundes 1. Der dargestellte Abstandshalter 9, gewöhnlich sind es je einer an jeder Seite des Einkaufswagens 2, ist auf dem Achsabschnitt 17 um die horizontale Achse 16 begrenzt schwenkbar gelagert. Der Abstandshalter 9 befindet sich entweder komplett oder teilweise im Raum 19, der durch die Korbböden 4b des zweiten und dritten Einkaufswagens 2 gebildet ist. Der Achsabschnitt 17 oder Befestigungsstelle 10a ist im Beispiel an einer Stützeinrichtung 15 angeordnet und erstreckt sich horizontal. Entsprechende Achsabschnitte 17 können auch an geeigneten Befestigungsstellen 10a an der Unterseite 4d der Korbböden 4b oder an den Fahrgestellen 3a angeordnet sein. Der Abstandshalter 9 befindet sich dabei in Nichtgebrauchslage und ist in etwa parallel zum über ihm liegenden Korbboden 4b angeordnet. Der zuunterst gezeichnete Korbboden 4b gehört dem ersten, also vordersten der drei genannten Einkaufswagen 2 an. Der zuoberst dargestellte Korbboden 4b gehört zum zuletzt eingeschobenen Einkaufswagen 2. An seiner Oberseite kann der Abstandshalter 9 mit einem Vorsprung 9a ausgestattet sein, der nach oben durch den gitterförmigen Korbboden 4b hindurchgeführt ist und einen der Querdrähte 4c des Korbbodens 4b von oben her umgreift. Dadurch ist der Abstandshalter 9 in seiner Nichtgebrauchslage arretiert und kann aus dieser ersten Position nicht nach unten schwenken. Bei der Montage der Einkaufswagen 2 werden die Abstandshalter 9 nach Aufsetzen des Korbes 4 auf das Fahrgestell 3 in diese gesicherte Lage gebracht, so dass die Abstandshalter 9 keinerlei Funktion ausüben. Jeder Abstandshalter 9 ist mit einem Vorsprung 9a über eine Sollbruchstelle 9c verbunden. Wird nun ein Einkaufswagen 2 in einen vorausbefindlichen Einkaufswagen 2 eingeschoben, um einen für den Transport bestimmten Stapelverbund 1 zu bilden, schlägt entweder ein am Korb 4 oder an einer Stützeinrichtung 15 vorgesehener Anschlag 20 oder aber, je nach Bauweise, ein die Funktion eines Anschlages 20 übernehmender Querdraht 4c des Korbbodens 4b des eingeschobenen Einkaufswagens 2 an den Vorsprung 9a der Abstandshalter 9 an und trennt diesen von den Abstandshaltern 9. Dadurch wird jeder Abstandshalter 9 seiner Arretierung beraubt und fällt jedoch nur so weit nach unten, bis er an der Oberseite des Korbbodens 4b des vorausbefindlichen Einkaufswagens 2 aufliegt. Beim Trennen der Einkaufswagen 2 aus dem Stapelverbund 1 wird jeder Einkaufswagen 2 nach hinten aus dem Stapelverbund 1 herausgezogen. Dabei "holpert" jeder Abstandshalter 9 des heraus zu ziehenden Einkaufswagens 2 so lange von einem zum nächsten Querdraht 4c des Korbbodens 4b des vorausbefindlichen Einkaufswagens 2, bis er den unteren hinteren Rand 6 des Korbes 4 des vorausbefindlichen Einkaufswagens 2 überwunden hat. Ihrer Arretierung beraubt, fallen nun die Abstandshalter 9 von selbst nach unten und stützen sich, nunmehr die zweite Position und damit die Gebrauchslage einnehmend, nach hinten an einem Stützteil 18 ab, das zweckmäßigerweise entweder an der Unterseite des Korbbodens 4b oder an einer Stützeinrichtung 15 angeordnet ist. Der oder die Abstandshalter 9 hängen nach unten und aus der Zeichnung erkennt man den restlichen am Abstandshalter 9 noch verbliebenen Abschnitt 9d, der zwischen dem Abstandshalter 9 und dem Vorsprung 9a gebildeten Sollbruchstelle 9c. Der Vorsprung 9a fällt bei diesem Vorgang als überschüssiges Teil zu Boden und hat keine Funktion mehr. Ergänzend ist der hintere untere Rand 6 des Korbes 4 eines vorausbefindlichen Einkaufswagens 2a strichpunktiert eingezeichnet. Jeder Abstandshalter 9 schlägt beim Einschieben des Einkaufswagens 2a an den hinteren unteren Rand 6 des Korbes 4 des vorausbefindlichen Einkaufswagens 2a an. Mehrere Einkaufswagen 2a mit in Gebrauchslage befindlichen Abstandshaltern 9 bilden somit den für den Gebrauch und für das Bereitstellen an einer Sammelstelle 14 bestimmten Stapelverbund 1a, bei dem der Stapelabstand b der einzelnen Einkaufswagen 2a größer ist als der jeweilige Stapelabstand a der einzelnen Einkaufswagen 2, die einen für den Transport bestimmten Stapelverbund 1 bilden. Der eben beschriebene Vorgang funktioniert auch mit Abstandshaltern 9, die wohl einen Vorsprung 9a aufweisen, nicht aber mit einem Querdraht 4c verrasten. Je nach Lage des Schwerpunktes der Abstandshalter 9 können diese auch in der Nichtgebrauchslage von selbst verbleiben und erst nach erfolgtem Anstoßen eine Zwischenlage so lange einnehmen, bis der Einkaufswagen 2a wieder aus dem Stapelverbund 1a heraus gezogen ist und die Abstandshalter 9 aufgrund ihrer vorbestimmten Schwerpunktslage von selbst ihre Gebrauchslage einnehmen.

In Anlehnung an die Lösung gemäß Fig. 9 zeigt Fig. 10 einen ebenfalls auf einem als Befestigungsstelle 10a dienenden Achsabschnitt 17 um eine horizontale Achse 16 bewegbar gelagerten Abstandshalter 9 in Gebrauchslage, in welcher der wenigstens eine Abstandshalter 9 auf einem am Fahrgestell 3 angeordneten Quersteg 3c abgestützt ist, der beispielsweise die beiden Längsseiten des Fahrgestelles 3 verbindet. Es kann pro Längsseite des Fahrgestelles 3 auch je ein die Funktion eines Quersteges 3c übernehmender Anschlag 3c vorgesehen sein. Der Abstandshalter 9 weist einen Rachen 9e auf, der den Quersteg 3c teilweise so umgreift, dass der Korb 4a mit Hilfe des wenigstens einen Abstandshalters 9 zusätzlich auf dem Fahrgestell 3 abgestützt ist. Die Zeichnung zeigt auch jenen Moment, an dem der Einkaufswagen 2a beim Ineinanderschiebevorgang in einen vorausbefindlichen Einkaufswagen 2a an dessen hinteren unteren Rand 6 des Korbes 4a anstößt, siehe auch Fig. 9. Bei jedem Anstoßvorgang wird somit der wenigstens eine Abstandshalter 9 immer wieder mit seinem Rachen 9e gegen den Quersteg 3c gedrückt. Stattet man den Rachen 9e mit einer kleinen Hinterschneidung 9f aus, verbleibt der wenigstens eine Abstandshalter 9 in der in der Zeichnung gezeigten Lage fixiert. Er löst sich beim Gebrauch des Einkaufswagens 2a nicht vom Quersteg 3c. Strichpunktiert gezeichnet ist der wenigstens eine Abstandshalter 9 in seiner Nichtgebrauchslage dargestellt, in der er unterhalb des Korbbodens 4b befindlich parallel zu diesem angeordnet ist und seine erste Position einnimmt. Anstelle von wenigstens einem bewegbaren Abstandshalter 9 kann auch mindestens ein nach erfolgtem Transport des Stapelverbundes 1 befestigbarer Abstandshalter 9 vorgesehen werden, siehe Fig. 2, mit dessen Hilfe der Korb 4a ebenfalls zusätzlich auf dem Fahrgestell 3 abgestützt ist. Alle hier nicht weiter beschriebenen Details sind analog den Beschreibungen gemäß Fig. 2 und Fig. 9 entnehmbar.

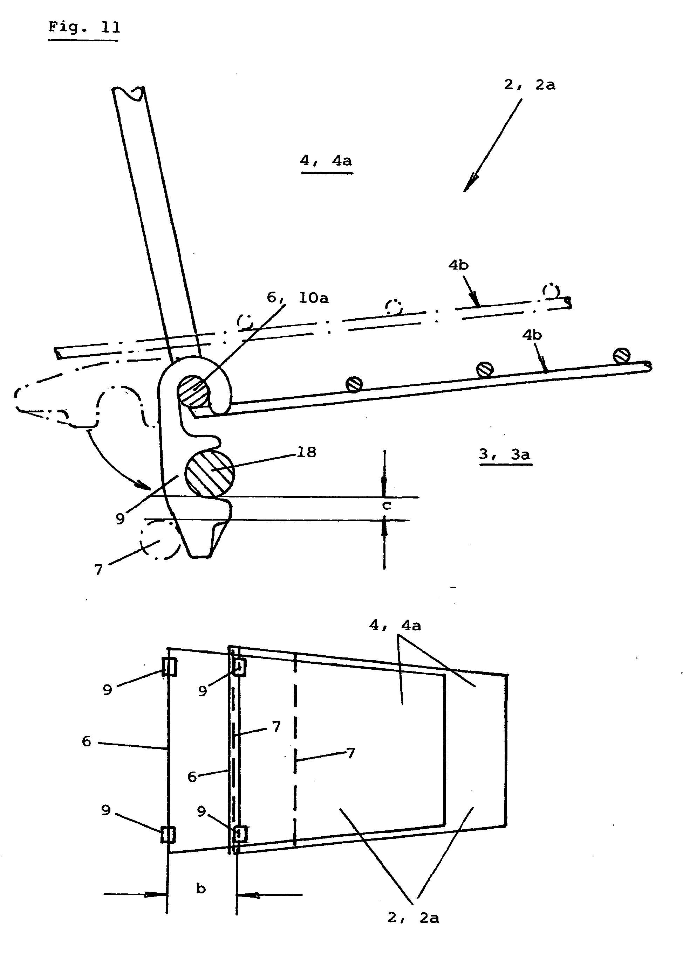

Fig. 11 zeigt ausschnittweise in zwei Ansichten jenen Bereich an einem Einkaufswagen 2, 2a, in dem sich der hintere untere Rand 6 des Korbes 4, 4a befindet. Im Beispiel dient der hintere untere Rand 6 als Befestigungsstelle 10a für wenigstens einen, in der Regel für zwei Abstandshalter 9. Der oder die Abstandshalter 9 sind am hinteren unteren Rand 6 um eine horizontale Achse schwenkbar gelagert. In Nichtgebrauchslage, strichpunktiert gezeichnet, weisen die Abstandshalter 9 nach hinten und verlaufen parallel zum Korbboden 4b und nehmen ihre erste Position ein. In der Zeichnung sind die Abstandshalter 9 in ihre Gebrauchslage nach unten geschwenkt, in der sie die zweite Position einnehmen. Die Abstandshalter 9 schlagen mit einem rachenförmigen Ausschnitt an ein oder je ein getrenntes Stützteil 18 an, das dem Fahrgestell 3, 3a angehört. Strichpunktiert ist der Querschnitt einer Querverbindung 7 oder zweier getrennter Querverbindungsabschnitte 7 eingezeichnet. Die Querverbindung 7 gehört einem rückwärtig in den Einkaufswagen 2, 2a eingeschobenen Einkaufswagen 2, 2a an, ist an dessen Fahrgestell 3, 3a angeordnet und schlägt an den wenigstens einen Abstandshalter 9 an, um einen Stapelabstand b zu bilden, siehe auch Draufsicht. Die Querverbindung 7 oder die Querverbindungsabschnitte 7 sind um das Maß c tiefer angeordnet als das wenigstens eine Stützteil 18. Dadurch ist es möglich, bei in Nichtgebrauchslage befindlichen, also nach oben geschwenkten Abstandshaltern 9 die Einkaufswagen 2 enger ineinander zu schieben, um die Stapelabstände a zu bilden, die kleiner sind als die Stapelabstände b. Bei diesem Vorgang unterwandert die Querverbindung 7 oder die Querverbindungsabschnitte 7 das wenigstens eine Stützteil 18. Der Stapelverbund 1a mit den Stapelabständen b ist wieder für eine Sammelstelle 14 bestimmt und dessen Länge B ist größer als die Länge A des für den Transport bestimmten Stapelverbundes 1 mit den Stapelabständen a, vgl. auch die vorangegangenen Beschreibungen.

Fig. 12 zeigt noch weitere Möglichkeiten, wie Abstandshalter 9 gestaltet und angeordnet oder durch ohnehin am Einkaufswagen 2 befindliche Funktionsteile gebildet werden können. So kann z. B. am unteren Fahrgestellrahmen 3b nach erfolgtem Transport der Einkaufswagen 2 nachträglich eine als Abstandshalter 9 nutzbare, zum Beispiel der Versteifung des Fahrgestelles 3 dienende Querstrebe 11 eingesetzt werden, an welche die Vorderseite des Fahrgestelles 3a eines einzuschiebenden Einkaufswagens 2a anstößt, um dann den größeren Stapelabstand b zu bilden. Der so gebildete Abstandshalter 9 befindet sich in Seitenansicht des Einkaufswagens 2a betrachtet zwischen der Vorderseite 4f und der Rückseite 4g des Korbes 4.
Auch die bekannte schwenkbare Rückwand 5 des Korbes 4, die sich an der Rückseite des Korbes 4 befindet, kann zusätzlich die Funktion eines Abstandshalters 9 übernehmen. Im Stapelverbund 1a beanspruchen die mit Ausnahme des letzten eingeschobenen Einkaufswagens 2a nach oben gedrückten Rückwände 5 einen gewissen Freiraum, um ein Verklemmen mit benachbarten Rückwänden 5 zu vermeiden. Dieser Freiraum bewirkt letztendlich den größeren Stapelabstand b. Transportiert man einen Stapelverbund 1 von Einkaufswagen 2 ohne eingesetzte Rückwände 5, verringern sich die einzelnen Stapelabstände auf das Maß a. Es ergibt sich ein für den Transport bestimmter Stapelverbund 1 mit der Länge A und nach erfolgtem Einsetzen der Rückwände 5 in die Einkaufswagen 2a ein Stapelverbund 1a mit der Länge B, der für eine Sammelstelle 14 bestimmt ist.
Gleiches lässt sich auch erzielen, wenn nach erfolgtem Transport des Stapelverbundes 1 nachträglich in jeden Korb 4 der Einkaufswagen 2 eine im vorderen Bereich des Korbes 4 vorgesehene, die Funktion eines Abstandshalters 9 übernehmende Trennwand 12 so eingesetzt wird, dass die Vorderseite 4f des Korbes 4a eines einzuschiebenden Einkaufswagens 2a an die Trennwand 12 anstößt und somit einen größeren Stapelabstand b bildet. Auch hier befindet sich der so gebildete Abstandshalter 9 zwischen der Vorderseite 4f und der Rückseite 4g des Korbes 4.
Als Abstandshalter 9 kann auch der Handgriff 13 eines jeden Einkaufswagens 2a dienen, denn nach erfolgtem Transport der Einkaufswagen 2 kann der Handgriff 13 zum Beispiel rastschlüssig und ortsfest am Korb 4 befestigt werden, um zwischen jedem Einkaufswagen 2a einen größeren Stapelabstand b und damit die größere Länge B des Stapelverbundes 1a entstehen zu lassen. Der Handgriff 13 befindet sich an der Rückseite 4g des Korbes 4 und damit hinten am Einkaufswagen 2, 2a.
Anstelle eines ortsfest befestigbaren Handgriffes 13 kann ebenfalls an der Rückseite 4g des Korbes 4 oder an der Rückseite des Fahrgestelles 3 ein die Funktion eines Abstandshalters 9 übernehmender bewegbarer Handgriff 13 angeordnet sein, der sich aus einer ersten festgelegten Position mit den daraus resultierenden Stapelabständen a in eine zweite festgelegte Position mit den daraus sich ergebenden Stapelabständen b überführen lässt. Lagert man nämlich den bekanntermaßen quer verlaufenden Handgriff 13 bewegbar um eine horizontale Achse, kann der Handgriff 13 eines jeden Einkaufswagens 2 zum Zwecke des Transports nach oben geschwenkt werden, so dass sich die Stapelabstände mit dem Maß a und die Länge des Stapelverbundes 1 mit dem Maß A einstellt. Schwenkt man nach erfolgtem Transport die Handgriffe 13 der Einkaufswagen 2 nach unten in die Gebrauchslage, in der die Handgriffe 13 dann anschließend ortsfest arretiert sind, ergeben sich die zwischen den Einkaufswagen 2a gebildeten größeren Stapelabstände b und damit die größere Gesamtlänge B des Stapelverbundes 1a, der nun zum Bereitstellen an einer Sammelstelle 14 geeignet ist. Mit Ausnahme des bewegbaren Handgriffes 13 nutzen alle hier vorgeschlagenen Lösungsbeispiele wieder die maßlichen, bereits beschriebenen Zusammenhänge die sich in Verbindung mit dem ungenutzten Stapelraumbereich 8 ergeben.

Die aufgeführten Ausführungsbeispiele zeigen, dass es, allein schon anhand der unterschiedlichen Bauformen bekannter Einkaufswagen 2, eine Vielzahl von Möglichkeiten gibt, mit Hilfe von Abstandshaltern 9 die Vorteile der Erfindung zu nutzen. Insofern können auch alle beschriebenen Befestigungsstellen 10a in einer für den Fachmann geläufigen Weise sowohl von den nachträglich anbringbaren Abstandshaltern 9 als auch von den bewegbaren Abstandshaltern 9 genutzt werden. Auch soll unter dem Begriff "Abstandshalter" nicht nur ein "Halter" an sich, sondern ganz allgemein eine Einrichtung verstanden werden, die dazu bestimmt und geeignet ist, Stapelabstände zwischen einzelnen Einkaufswagen 2 von a in b und damit die Länge eines Stapelverbundes 1 von A in B zu vergrößern, um einen Stapelverbund 1a zu erhalten.

## Patentansprüche

1. Aus einer Anzahl von gleichen ineinander geschobenen Einkaufswagen (2) bestehender Stapelverbund (1), bei dem die mit einem Fahrgestell (3) und mit einem mit dem Fahrgestell (3) verbundenen Korb (4) ausgestatteten Einkaufswagen (2) mit ihren Fahrgestellen (3) und mit ihren Körben (4) so ineinander geschoben sind, dass zwischen jedem Einkaufswagen (2) ein erster Stapelabstand mit dem Maß a gebildet ist, wobei jeder Korb (4) einen hinteren unteren Rand (6) aufweist und jedes Fahrgestell (3) mit einer Querverbindung (7) ausgestattet ist, die im oberen Bereich des Fahrgestelles (3) angeordnet ist und wobei an jedem Einkaufswagen (2) nachträglich mindestens ein Abstandshalter (9) durch Inanspruchnahme von wenigstens einer Befestigungsstelle (10a) ortsfest so angebracht ist, dass beim Ineinanderschieben der mit wenigstens einem Abstandshalter (9) ausgestatteten Einkaufswagen (2a) wenigstens ein in seiner Lage unveränderbares Bauteil des jeweils einen Einkaufswagens (2a) an den mindestens einen Abstandshalter (9) des jeweils benachbarten Einkaufswagens (2a) anstößt oder umgekehrt, so dass zwischen den einzelnen Einkaufswagen (2a) des so gebildeten zweiten Stapelverbundes (1a) jeweils ein zweiter Stapelabstand mit dem Maß b gebildet ist, der größer ist als der erste Stapelabstand mit dem Maß a und dass die Länge B des zweiten Stapelverbundes (1a) größer ist als die Länge A des aus der gleichen Anzahl von Einkaufswagen (2) bestehenden ersten Stapelverbundes (1), **dadurch gekennzeichnet, dass** die Anordnung der mindestens einen Befestigungsstelle (10a) für den wenigstens einen Abstandshalter (9) so gewählt ist, dass beim Ineinanderschieben der Einkaufswagen (2a)
- entweder der wenigstens eine Abstandshalter (9) eines einzuschiebenden Einkaufswagens (2a) an den hinteren unteren Rand (6) des Korbes (4) anstößt
- oder dass die Abstandshalter (9) nach außen über die Seitenwände (4c) des Korbes (4) vorstehen und an die hintere Begrenzung (4h) der Seitenwände (4c) des Korbes (4) des vorausbefindlichen Einkaufswagens (2a) anstoßen
- oder dass die Querverbindung (7) eines einzuschiebenden Einkaufswagens (2a) an den wenigstens einen Abstandshalter (9) des vorausbefindlichen Einkaufswagens (2a) anstößt und der wenigstens eine Abstandshalter (9) am hinteren unteren Rand (6) des Korbes (4) angebracht ist und entweder nach hinten vorsteht oder ein vorbestimmtes Stück nach unten ragt.

2. Aus einer Anzahl von gleichen ineinander geschobenen Einkaufswagen (2) bestehender Stapelverbund (1), bei dem die Einkaufswagen (2) mit einem Fahrgestell (3) sowie mit einem mit dem Fahrgestell (3) verbundenen Korb (4) ausgestattet sind und wenigstens ein bewegbares Mittel aufweisen, das zum Anschlagen an einen nächstfolgenden Einkaufswagen (2) bestimmt ist und wobei die Einkaufswagen (2) im Stapelverbund (1) mit ihren Fahrgestellen (3) und mit ihren Körben (4) so ineinander geschoben sind und das wenigstens eine Mittel eine Lage derart einnimmt, dass zwischen jedem Einkaufswagen (2) ein erster Stapelabstand mit dem Maß a gebildet ist und die Einkaufswagen (2) zur Benutzung aus dem ersten Stapelverbund (1) entnehmbar sind, **dadurch gekennzeichnet, dass** das wenigstens eine Mittel eines jeden Einkaufswagens (2) als wenigstens ein Abstandshalter (9) ausgebildet ist, der nach der Entnahme der Einkaufswagen (2) aus dem ersten Stapelverbund (1) entweder von selbst eine Gebrauchslage einnimmt oder von Hand in diese Gebrauchslage überführbar ist, in der er verbleibt und seine Anschlagfunktion wahrnimmt und dass durch die in Gebrauchslage verbleibenden Abstandshalter (9) Einkaufswagen (2a) mit einem zweiten Stapelabstand mit dem Maß b gebildet sind, der größer ist als der erste Stapelabstand mit dem Maß a und dass die Einkaufswagen (2a) einen zweiten Stapelverbund (1a) bilden, dessen Länge B größer ist als die Länge A des aus der gleichen. Anzahl von Einkaufswagen (2) gebildeten ersten Stapelverbundes (1) und dass der erste Stapelverbund (1) für den Transport und der zweite Stapelverbund (1a) für eine Sammelstelle (14) zur Nutzung der einzelnen Einkaufswagen (2a) bestimmt ist.

3. Stapelverbund nach Anspruch 2, **dadurch gekennzeichnet, dass** der wenigstens eine Abstandshalter (9) entweder am Korb (4, 4a) oder am Fahrgestell (3, 3a) angeordnet ist.

4. Stapelverbund nach Anspruch 3, **dadurch gekennzeichnet, dass** der wenigstens eine Abstandshalter (9) am hinteren unteren Rand (6) des Korbes (4, 4a) um eine horizontale Achse schwenkbar gelagert ist.

5. Stapelverbund nach Anspruch 2, **dadurch gekennzeichnet, dass** der wenigstens eine Abstandshalter (9) an mindestens einem unterhalb des Korbes (4a) angeordneten Stützteil (18) anschlägt, wenn zwischen den Einkaufswagen (2a) jeweils ein zweiter Stapelabstand mit dem Maß b gebildet ist.

6. Stapelverbund nach Anspruch 5, **dadurch gekennzeichnet, dass** eine am Fahrgestell (3a) angeordnete Querverbindung (7) vorgesehen ist, die tiefer als das mindestens eine Stützteil (18) angeordnet ist und dass bei einem zweiten Stapelabstand mit dem Maß b die Querverbindung (7) eines rückwärtigen Einkaufswagens (2a) an den mindestens einen Abstandshalter (9) eines vorausbefindlichen Einkaufswagens (2a) anschlägt.

7. Stapelverbund nach Anspruch 6, **dadurch gekennzeichnet, dass** die Querverbindung (7) durch zwei Querverbindungsabschnitte gebildet ist.

8. Stapelverbund nach Anspruch 2, **dadurch gekennzeichnet, dass** bei einem für den Transport befindlichen Stapelverbund (1) der wenigstens eine bewegbare Abstandshalter (9) der Einkaufswagen (2) jeweils komplett oder teilweise in einem Raum (19) untergebracht ist, der sich zwischen dem Korbboden (4b) eines Einkaufswagens (2) und dem Korbboden (4b) des jeweils vorausbefindlichen Einkaufswagens (2) befindet.

9. Stapelverbund nach Anspruch 2, **dadurch gekennzeichnet, dass** die bewegbaren Abstandshalter (9) der im Stapelverbund (1) befindlichen Einkaufswagen (2) in ihrer Nichtgebrauchslage lösbar arretiert sind oder aufgrund der Lage ihres Schwerpunktes von selbst in ihrer Nichtgebrauchslage verbleiben.

10. Stapelverbund nach Anspruch 2, **dadurch gekennzeichnet, dass** der Korb (4a) eines jeden Einkaufswagens (2a) mit Hilfe des wenigstens einen Abstandshalters (9) zusätzlich auf dem Fahrgestell (3a) abgestützt ist.

11. Stapelverbund nach Anspruch 2, **dadurch gekennzeichnet, dass** die Abstandshalter (9) bei jedem Einkaufswagen (2, 2a) durch einen aus einer ersten Position in eine zweite Position überführbaren Handgriff (13) gebildet sind.

## Claims

1. Stack (1) comprising a number of identical shopping carts (2) pushed one inside the other, in which stack (1) the shopping carts (2) which are equipped with a chassis (3) and with a basket (4) which is connected to the chassis (3) are pushed one inside the other with their chassis (3) and with their baskets (4) in such a way that a first stack spacing with the dimension a is formed between each shopping cart (2), each basket (4) having a rear lower edge (6) and each chassis (3) being equipped with a transverse connection (7) which is arranged in the upper region of the chassis (3), and at least one spacer element (9) being subsequently attached to each shopping cart (2) in a stationary manner by using at least one fastening point (10a) in such a way that, when the shopping carts (2a) which are equipped with at least one spacer element (9) are pushed one inside the other, at least one component, the position of which cannot vary, of the respective one shopping cart (2a) abuts the at least one spacer element (9) of the respectively adjacent shopping cart (2a) or vice versa, with the result that a second stack spacing with the dimension b is formed in each case between the individual shopping carts (2a) of the second stack (1a) which is formed in this way, which second stack spacing is greater than the first stack spacing with the dimension a, and that the length B of the second stack (1a) is greater than the length A of the first stack (1) which comprises the same number of shopping carts (2), **characterized in that** the arrangement of the at least one fastening point (10a) for the at least one spacer element (9) is selected in such a way that, when the shopping carts (2a) are pushed one inside the other,
- either the at least one spacer element (9) of a shopping cart (2a) which is to be pushed in abuts the rear lower edge (6) of the basket (4),
- or **in that** the spacer elements (9) project to the outside beyond the side walls (4c) of the basket (4) and abut the rear boundary (4h) of the side walls (4c) of the basket (4) of the shopping cart (2a) which is situated in front,
- or **in that** the transverse connection (7) of a shopping trolley (2a) which is to be pushed in abuts the at least one spacer element (9) of the shopping cart (2a) which is situated in front, and the at least one spacer element (9) is attached to the rear lower edge (6) of the basket (4) and either projects to the rear or protrudes downwards by a predefined amount.

2. Stack (1) comprising a number of identical shopping carts (2) pushed one inside the other, in which stack (1) the shopping carts (2) are equipped with a chassis (3) and with a basket (4) which is connected to the chassis (3), and have at least one movable means which is intended for coming into contact with a following shopping cart (2), and the shopping carts (2) being pushed one inside the other with their chassis (3) and with their baskets (4) in the stack (1) in such a way, and the at least one means assuming a position in such a way, that a first stack spacing with the dimension a is formed between each shopping cart (2) and the shopping carts (2) can be removed from the first stack (1) for use, **characterized in that** the at least one means of each shopping cart (2) is configured as at least one spacer element (9) which, after the removal of the shopping carts (2) from the first stack (1), either automatically assumes a use position or can be transferred by hand into the said use position, in which it remains and performs its stop function, and **in that**, as a result of the spacer elements (9) which remain in the use position, shopping carts (2a) are formed with a second stack spacing with the dimension b, which second stack spacing is greater than the first stack spacing with the dimension a, and **in that** the shopping carts (2a) form a second stack (1a), the length B of which is greater than the length A of the first stack (1) which is formed from the same number of shopping carts (2), and **in that** the first stack (1) is intended for transport and the second stack (1a) is intended for a collection point (14) for the use of the individual shopping carts (2a).

3. Stack according to Claim 2, **characterized in that** the at least one spacer element (9) is arranged either on the basket (4, 4a) or on the chassis (3, 3a).

4. Stack according to Claim 3, **characterized in that** the at least one spacer element (9) is mounted at the rear lower edge (6) of the basket (4, 4a) such that it can be pivoted about a horizontal axis.

5. Stack according to Claim 2, **characterized in that** the at least one spacer element (9) comes into contact with at least one supporting part (18) which is arranged below the basket (4a) when a second stack spacing with the dimension b is formed in each case between the shopping carts (2a).

6. Stack according to Claim 5, **characterized in that** a transverse connection (7) which is arranged on the chassis (3a) is provided, which transverse connection (7) is arranged lower than the at least one supporting part (18), and **in that**, in the case of a second stack spacing with the dimension b, the transverse connection (7) of a rear shopping cart (2a) comes into contact with the at least one spacer element (9) of a shopping cart (2a) which is situated in front of it.

7. Stack according to Claim 6, **characterized in that** the transverse connection (7) is formed by two transverse connection sections.

8. Stack according to Claim 2, **characterized in that**, in a stack (1) which is situated for transport, the at least one movable spacer element (9) of the shopping carts (2) is accommodated in each case completely or partially in a space (19) which is situated between the basket bottom (4b) of a shopping cart (2) and the basket bottom (4b) of the shopping cart (2) which is situated in front in each case.

9. Stack according to Claim 2, **characterized in that** the movable spacer elements (9) of the shopping carts (2) which are situated in the stack (1) are locked releasably in their non-use position or remain automatically in their non-use position on account of the position of their centroid.

10. Stack according to Claim 2, **characterized in that** the basket (4a) of each shopping cart (2a) is supported additionally on the chassis (3a) with the aid of the at least one spacer element (9).

11. Stack according to Claim 2, **characterized in that** the spacer elements (9) in each shopping cart (2, 2a) are formed by a handle (13) which can be transferred from a first position into a second position.

## Revendications

1. Assemblage empilé (1) constitué d'une pluralité de chariots de supermarché (2) identiques encastrés les uns dans les autres, dans lequel les chariots de supermarché (2) munis d'un châssis (3) et d'un panier (4) assemblé au châssis (3) sont encastrés les uns dans les autres avec leurs châssis (3) et avec leurs paniers (4) de telle sorte qu'entre chaque chariot de supermarché (2) soit formé un premier espacement d'empilement ayant une dimension a, chaque panier (4) présentant un bord inférieur arrière (6) et chaque châssis (3) étant muni d'une liaison transversale (7), laquelle est disposée dans la région supérieure du châssis (3) et au moins un élément d'espacement (9) étant monté fixement ultérieurement sur chaque chariot de supermarché (2) en utilisant au moins un point de fixation (10a), de telle sorte que lors de l'encastrement les uns dans les autres des chariots de supermarché (2a) munis d'au moins un élément d'espacement (9), au moins un composant du chariot de supermarché respectif (2a), dont la position est immuable, bute contre l'au moins un élément d'espacement (9) du chariot de supermarché respectif adjacent (2a) ou inversement, de sorte qu'entre les chariots de supermarché individuels (2a) du deuxième assemblage empilé (1a) ainsi formé, un deuxième espacement d'empilement soit à chaque fois formé, ayant une dimension b qui est supérieure au premier espacement d'empilement ayant une dimension a et que la longueur B du deuxième assemblage empilé (1a) soit supérieure à la longueur A du premier assemblage empilé (1) constitué du même nombre de chariots de supermarché (2), **caractérisé en ce que** l'agencement de l'au moins un point de fixation (10a) pour l'au moins un élément d'espacement (9) est choisi de telle sorte que lors de l'encastrement les uns dans les autres des chariots de supermarché (2a)
- soit l'au moins un élément d'espacement (9) d'un chariot de supermarché à encastrer (2a) bute contre le bord inférieur arrière (6) du panier (4)
- soit les éléments d'espacement (9) fassent saillie vers l'extérieur au-delà des parois latérales (4c) du panier (4) et butent contre la limitation arrière (4h) des parois latérales (4c) du panier (4) du chariot de supermarché situé devant eux (2a)
- soit la liaison transversale (7) d'un chariot de supermarché (2a) à encastrer bute contre l'au moins un élément d'espacement (9) du chariot de supermarché (2a) situé devant lui et l'au moins un élément d'espacement (9) soit monté sur le bord inférieur arrière (6) du panier (4) et fasse saillie soit vers l'arrière soit vers le bas sur une distance prédéterminée.

2. Assemblage empilé (1) constitué d'une pluralité de chariots de supermarché (2) identiques encastrés les uns dans les autres, dans lequel les chariots de supermarché (2) sont munis d'un châssis (3) et d'un panier (4) assemblé au châssis (3) et présentent au moins un moyen mobile, lequel est prévu pour buter contre un chariot de supermarché suivant (2), et dans lequel les chariots de supermarché (2) avec leurs châssis (3) et leurs paniers (4) sont encastrés les uns dans les autres dans l'assemblage empilé (1) de telle sorte, et l'au moins un moyen prend une position telle, qu'entre chaque chariot de supermarché (2) soit formé un premier espacement d'empilement ayant une dimension a, et que les chariots de supermarché (2) puissent être enlevés du premier assemblage empilé (1) en vue de leur utilisation, **caractérisé en ce que** l'au moins un moyen de chaque chariot de supermarché (2) est réalisé sous forme d'au moins un élément d'espacement (9) qui, après le retrait des chariots de supermarché (2) du premier assemblage empilé (1), adopte de lui-même une position d'utilisation ou peut être transféré à la main dans cette position d'utilisation, dans laquelle il reste et adopte sa fonction de butée, et **en ce que** du fait des éléments d'espacement (9) restant dans la position d'utilisation, des chariots de supermarché (2a) sont formés avec un deuxième espacement d'empilement ayant une dimension b qui est supérieure au premier espacement d'empilement ayant une dimension a et **en ce que** les chariots de supermarché (2a) forment un deuxième assemblage empilé (1a) dont la longueur B est supérieure à la longueur A du premier assemblage empilé (1) constitué du même nombre de chariots de supermarché (2) et **en ce que** le premier assemblage empilé (1) est prévu pour le transport et le deuxième assemblage empilé (1a) est prévu pour un point de collecte (14) pour l'utilisation des chariots de supermarché individuels (2a).

3. Assemblage empilé selon la revendication 2, **caractérisé en ce que** l'au moins un élément d'espacement (9) est disposé soit sur le panier (4, 4a) soit sur le châssis (3, 3a).

4. Assemblage empilé selon la revendication 3, **caractérisé en ce que** l'au moins un élément d'espacement (9) est monté de manière à pouvoir pivoter autour d'un axe horizontal sur le bord inférieur arrière (6) du panier (4, 4a).

5. Assemblage empilé selon la revendication 2, **caractérisé en ce que** l'au moins un élément d'espacement (9) bute contre au moins une partie de support (18) disposée sous le panier (4a) lorsqu'un deuxième espacement d'empilement respectif ayant une dimension b est formé entre les chariots de supermarché (2a).

6. Assemblage empilé selon la revendication 5, **caractérisé en ce qu'**il est prévu une liaison transversale (7) disposée sur le châssis (3a), laquelle est disposée plus bas que l'au moins une partie de support (18), et **en ce que** dans le cas d'un deuxième espacement d'empilement ayant une dimension b, la liaison transversale (7) d'un chariot de supermarché disposé en arrière (2a) bute contre l'au moins un élément d'espacement (9) d'un chariot de supermarché (2a) situé devant lui.

7. Assemblage empilé selon la revendication 6, **caractérisé en ce que** la liaison transversale (7) est formée par deux portions de liaison transversale.

8. Assemblage empilé selon la revendication 2, **caractérisé en ce que** dans le cas d'un assemblage empilé (1) prévu pour le transport, l'au moins un élément d'espacement mobile (9) des chariots de supermarché (2) est monté à chaque fois complètement ou en partie dans un espace (19) qui se trouve entre le fond de panier (4b) d'un chariot de supermarché (2) et le fond de panier (4b) du chariot de supermarché (2) se trouvant à chaque fois devant lui.

9. Assemblage empilé selon la revendication 2, **caractérisé en ce que** les éléments d'espacement mobiles (9) du chariot de supermarché (2) se trouvant dans l'assemblage empilé (1) sont bloqués de manière desserrable dans leur position de non utilisation ou restent dans leur position de non utilisation d'eux-mêmes du fait de la position de leur centre de gravité.

10. Assemblage empilé selon la revendication 2, **caractérisé en ce que** le panier (4a) de chaque chariot de supermarché (2a) est supporté en outre sur le châssis (3a) à l'aide de l'au moins un élément d'espacement (9).

11. Assemblage empilé selon la revendication 2, **caractérisé en ce que** les éléments d'espacement (9) pour chaque chariot de supermarché (2, 2a) sont formés par une poignée (13) pouvant être transférée d'une première position dans une deuxième position.
